# EUROPEAN PATENT APPLICATION

(11) **EP 1 719 561 A1**
(43) Date of publication of application: **08.11.2006**
(21) Application number: 04712173.6
(22) Date of filing: 18.02.2004
(51) Int. Cl.: B08B 3/02

(54) **WASHING APPARATUS FOR PLATE MATERIAL**

(71) Applicant: Kawasaki Plant Systems Kabushiki Kaisha, Kobe-shi, Hyogo 6508670 (JP); Corning Japan K.K., 1-11-44, Akasaka, Minato-ku Tokyo 107-0052 (JP)
(72) Inventor: AOKI, Yoshiaki, Kobe-shi, Hyogo 651-2401 (JP); TSUJITA, Keiji, Kobe-shi, Hyogo 651-2102 (JP); KUGE, Morimasa, Kobe-shi, Hyogo 651-0874 (JP); YOKOYAMA, Takaaki, Kobe-shi, Hyogo 651-2411 (JP); SAKURAI, Takashi, Chiba 277-0827 (JP); INABA, Hideki, Shizuoka 437-1302 (JP); KAMEI, Hiroyuki, Iwata-gun, Shizuoka 437-1121 (JP)
(74) Representative: Leinweber & Zimmermann
(86) International application number: PCT/JP2004/001788
(87) International publication number: WO 2005/077553

(57) **Abstract**

A plate material washing system that is capable of washing plate materials such as large-sized and thinned glass plates quickly and effectively so that their quality is improved, comprising a belt conveyor (2) that supports a lower end of the glass plate in a substantially upright position; a fluid guide (8) that applies a fluid pressure to a side surface of the glass plate (G) to support the glass plate (G) in the substantially upright position and in a non-contact state; a cleaning agent washing device (3) configured to supply to a surface of the glass plate a cleaning liquid from the fluid guide (8); a high-pressure liquid spray washing device (4) including a vertically movable high-pressure liquid spray element (19) that ejects a high-pressure liquid spray to both surfaces of the glass plate; and a water removing device (6) including a water removing element (30) extending vertically to apply an air knife which is a membranous air jet to the surfaces of the glass plate.

## Description

### [Technical Field]

The present invention relates to a plate material washing system. More particularly, the present invention relates to a plate material washing system that is configured to wash surfaces of plate materials such as rare metal plate materials, silicon plate materials, or flat display glasses by using a cleaning agent, to wash the surfaces of the plate materials by using a high-pressure liquid spray, and to remove water from the surfaces of the washed plate materials.

### [Background Art]

Conventionally, glass plates are used in various fields. In particular, glass plates (also referred to as glass substrates) for use with liquid crystal displays, plasma displays, etc are very thin. The glass plates with a thickness of about 0.7 mm and a size of about 550 mm X 650 mm are often manufactured. The glass plate is typically conveyed in a horizontal position (lying position) by a belt conveyor or the like and is subjected to processing such as trimming or venting in the horizontal position in the respective units. After the processing, the glass plate is washed in the horizontal position (see for example, Japanese Laid-Open Patent Application Publication No. 11 - 44877 and Japanese Patent No. 2699911). As the washing system that washes the glass plate in the horizontal position, there has been disclosed a washing system equipped with an ultrasonic washing unit that washes glass plates for the purpose of enhanced washing effects (see Japanese Laid-Open Patent Application Publication No. Hei. 9 -19667).

In addition, there has been disclosed an apparatus that conveys the glass plates in a substantially upright position, leaning against roller trains, and, in this state grinds each of the edges of the glass plates (see e.g., Japanese Patent Publication No. 2623476).

In recent years, there has been a need for a larger-sized mother glass that is formed into a plurality of glass substrates so that a yield increases for improved productivity or the glass substrates are incorporated into larger displays and so on. As the size of the mother glass increases, the number of glass substrates into which one mother glass is formed increases, increasing a yield. Also, the glass substrates for large-sized displays can be manufactured. In addition, since there is a need for improved performance of displays and so on by thinning the glass substrate, the mother glass is more likely to be thinner. Furthermore, there have been increasing demands for a higher quality and for a lower cost of the glass substrates.

However, in the technique for conveying and washing the glass plate in the horizontal position and in the technique for conveying the glass plate in the substantially upright position, leaning against some structural members, the larger and thinner glass plate may be broken due to deflection because of its own weight, or due to a reactive force applied from the structural members that support the surface of the glass plate. As a matter of course, the same problems arise when the glass plate is washed. With the glass plate in contact with the structural member, the contact portion is difficult to wash. Furthermore, cleanliness has been required to become higher than that resulting from the supersonic washing

### [Disclosure of the Invention]

The present invention has been developed in order to solve the above mentioned problems, and an object of the present invention is to provide a plate material washing system that is configured to wash the plate materials including large-sized and thinned glass plates so that damage to the plate materials such as break are inhibited and a quality of the plate materials is improved.

A cleaning agent washing device of plate material of the present invention comprise a support unit configured to support a lower end of a plate material placed in a substantially upright position; a fluid guide configured to apply a fluid pressure to a side surface of the plate material to support the plate material in the substantially upright position and in a non-contact state; and a cleaning liquid supply unit configured to supply a cleaning liquid to the plate material in the substantially upright position; wherein the cleaning liquid supply unit includes at least a part of the fluid guide that is configured to supply a flow of a cleaning liquid to the side surface of the plate material.

In such a configuration, the both surfaces or peripheral edge regions of the plate material can be entirely washed by using the cleaning agent without influence of weight of the plate material or a large reactive force from structural members. Therefore, oil as well as dust can be removed from the plate material.

Preferably, the fluid guide included in the cleaning liquid supply unit may include first fluid ejecting portions arranged vertically in plural stages to extend horizontally, and the first fluid ejecting portions may be each provided with a plurality of cleaning liquid ejecting holes. This is because the cleaning agent can be supplied to the entire surface of the plate material because of its gravitational force. Such effects are achieved with a simple construction.

Preferably, the fluid guide included in the cleaning liquid supply unit may further include second fluid ejecting portions arranged to extend vertically and to be horizontally spaced apart from each other, and the second fluid ejecting portions may be each provided with a plurality of cleaning liquid ejecting holes. This is because the cleaning liquid can be supplied to the entire surface of the plate material even if the conveyance speed increases in the apparatus for conveying the plate material.

Preferably, the support unit may include a conveyance portion configured to horizontally convey the plate material in the substantially upright position, and the fluid guide may be disposed along a conveying path of the conveyance portion. This is because the conveyance portion and the fluid guide enable the plate material in the substantially upright position to be carried into and out from the cleaning agent washing device.

Preferably, at an upstream end side and a downstream end side of the cleaning liquid supply unit in the direction in which the plate material is conveyed, air curtain elements may be mounted to extend vertically along the plate material placed in the substantially upright position, and the air curtain elements may be provided with a plurality of air ejecting nozzles arranged vertically. This is because the air curtain elements are able to inhibit entry of water into and from upstream and downstream stages. This makes it possible to minimize a variation in a concentration of the cleaning liquid.

A high-pressure liquid spray washing device of plate material of the present invention comprises a support unit configured to support a lower end of a plate material placed in a substantially upright position; a fluid guide configured to apply a fluid pressure to a side surface of the plate material to support the plate material in the substantially upright position and in a non-contact state; and a high-pressure liquid spray unit configured to apply a high-pressure liquid spray to both surfaces of the plate material in the substantially upright position.

In such a configuration, the both surfaces of the plate material can be entirely washed by using the high-pressure liquid spray without influence of weight of the plate material or a large reactive force from structural members. So, the large-sized and thinned plate material can be washed so as to obtain a high quality without occurrence of damage such as break. In addition, the fluid from the fluid guide is able to remove the dust that has been removed from the surface of the plate material and is floating in the water.

Preferably, the support unit may include a conveyance portion configured to horizontally convey the plate material in the substantially upright position, and the fluid guide may be disposed along a path in which the conveyance portion conveys the plate material. This is because the conveyance portion and the fluid guide are able to carry the plate material in the substantially upright position into and out from the high-pressure liquid spray washing device.

Preferably, the high-pressure liquid spray unit may include high-pressure liquid spray nozzles configured to be vertically movable, and high-pressure liquid spray nozzles disposed on both sides of the plate material may be located opposite to face each other with respect to a plate material support position. Thereby, since the high-pressure liquid spray is applied to the both surfaces of the plate material being conveyed in the substantially upright position, the entire surface of the plate material can be washed only by vertically moving the high-pressure liquid spray nozzle. In addition, since the high-pressure liquid spray nozzles on both sides are located opposite to face each other, damage to the plate material caused by the high-pressure liquid can be avoided.

Preferably, the high-pressure liquid spray unit may include a plurality of high-pressure liquid spray nozzles vertically arranged, and high-pressure liquid spray nozzles disposed on both sides of the plate material may be located opposite to face each other with respect to a plate material support position. Thereby, since the high-pressure liquid spray is applied to the both surfaces of the plate material being conveyed in the substantially upright position, the entire surface of the plate material can be washed only by vertically arranging a plurality of high-pressure liquid spray nozzles.

Preferably, the high-pressure liquid spray nozzles may be rotatable around rotational axes extending in a direction substantially perpendicular to the surface of the plate material to be washed. This is because a wider region of the surface of the plate material can be washed.

Preferably, movable fluid guides may be mounted adjacent the high-pressure liquid spray nozzles so as to be vertically movable together with the high-pressure liquid spray nozzles. Whereas a water jet is applied to the plate material with a relatively high pressure, adjacent movable fluid guides are able to attenuate vibration or the like of the plate material, which is caused by the high-pressure liquid spray.

Preferably, the high-pressure liquid spray washing device may further comprise a water washing unit mounted at the upstream end side in the direction in which the plate material is conveyed so as to extend in a vertical direction of the plate material in the substantially upright position, and the water washing unit comprise a plurality of water ejecting nozzles arranged vertically. This is because the water washing unit is able to wash away adhesive substances in the upstream stage such as the cleaning liquid.

A water removing device of plate material of the present invention comprise a conveyance unit configured to convey a plate material placed in a substantially upright position while supporting a lower end of the plate material; a fluid guide configured to apply a fluid pressure to a side surface of the plate material to support the plate material in the substantially upright position and in a non-contact state; and water removing units extending substantially from an upper end of the plate material to a lower end of the plate material to eject a membranous air jet to both surfaces of the plate material in the substantially upright position.

In such a configuration, since the conveyance unit and the fluid guide allow a membranous air jet to be blown to an outer surface of the plate material being conveyed in the substantially upright position is blown away, and thus is removed effectively from the both surfaces or peripheral edge regions of the plate material without influence of weight of the plate material or the large reactive force from the structural members, that is, the plate material can be dried.

Preferably, the water removing device of plate material may further comprise water washing units that are located upstream of each of the water removing units and extend vertically on the both sides of the plate material in the substantially upright position; wherein the water washing units may be provided with a plurality of water ejecting nozzles arranged vertically. This is because re-adhesion of the dust or the like onto the plate material can be inhibited.

Preferably, the water washing unit may be disposed to be tilted in an upstream direction in the direction in which the plate material is conveyed. This is because new water can be supplied to the entire surface of the plate material being conveyed in the conveyance direction.

Preferably, the water removing unit may be disposed to be tilted in an upstream direction in the direction in which the plate material is conveyed. This is because the water can be blown away downward and in the upstream direction from the surface of the plate material.

A plate material washing system of the present invention comprises a conveyance unit configured to convey a plate material in a substantially upright position while supporting a lower end of the plate material; a fluid guide configured to apply a fluid pressure to a side surface of the plate material to support the plate material in the substantially upright position and in a non-contact state; any one of the above cleaning agent washing devices mounted in a path along which the conveyance unit conveys the plate material; any one of the above high-pressure liquid spray washing devices mounted downstream of the cleaning agent washing device in the path along which the conveyance unit conveys the plate material; any one of the above water removing devices mounted downstream of the high-pressure liquid spray washing device in the path along which the conveyance unit conveys the plate material.

In such a construction, the plate material is washed and water-removed efficiently without influence of its weight and the large reactive force from the structural members.

Preferably, the plate material washing system may further comprise a finishing washing device located between the high-pressure liquid spray washing device and the water removing device, the finishing washing device including fluid guides on both sides of the conveyance unit. This is because the fluid applied from the fluid guides washes away the dust or the like that has been removed away from the plate material and is floating in the water.

Hereinbelow, embodiments of the plate material washing system of the present invention, the cleaning agent washing device, the high-pressure liquid spray washing device, and the water removing device which are suitable for use in the washing system will be described with reference to the accompany drawings.

### [Brief Description of the Drawings]

Fig. 1 is a front view showing an embodiment of a washing system according to the present invention;
Fig. 2 is a plan view of the washing system of Fig. 1;
Fig. 3(a) is a plan view showing an embodiment of a cleaning agent washing device in the washing system of Fig. 1; and Fig. 3(b) is a front view of Fig. 3(a), from which a fluid guide on a near side is omitted for easier understanding;
Fig. 4 is a cross-sectional view taken along line IV-IV of Fig. 3(a);
Fig. 5 is a side view showing the cleaning agent washing device of Fig. 3, and is a view taken in the direction of arrows along line V ― V of Fig. 3(b);
Fig. 6 is a front view of an embodiment of a high-pressure liquid spray washing device in the washing system of Fig. 1, a part of which is cut away;
Fig. 7 is a plan view of the high-pressure liquid spray unit of Fig. 6;
Fig. 8(a) is a front view showing an example of a high-pressure liquid spray nozzle of the high-pressure liquid spray washing device of Fig. 6, and Fig. 8(b) is a cross-sectional view taken along line VIII - VIII of Fig. 8(a);
Fig. 9 is a side view showing an example of a washing element of the high-pressure liquid spray washing device of Fig. 6, corresponding to a view taken in the directions of arrows along line IX - IX of Fig. 6;
Fig. 10 is a front view showing an example of a finishing washing device in the washing system of Fig. 1;
Fig. 11 is a front view showing an embodiment of a water removing device in the washing system of Fig. 1;
Fig. 12 is a plan view of the water removing device of Fig. 11;
Fig. 13 is a side view showing a water washing element of the water removing device of Fig. 11, corresponding to a cross-sectional view taken along line XIII-XIII of Fig.11; and
Fig. 14(a) is a side view showing a water removing element of the water removing device of Fig. 11, corresponding to a cross-sectional view taken along line XIV-XIV of Fig. 11, and Fig. 14(b) is a plan view of Fig. 14(a).

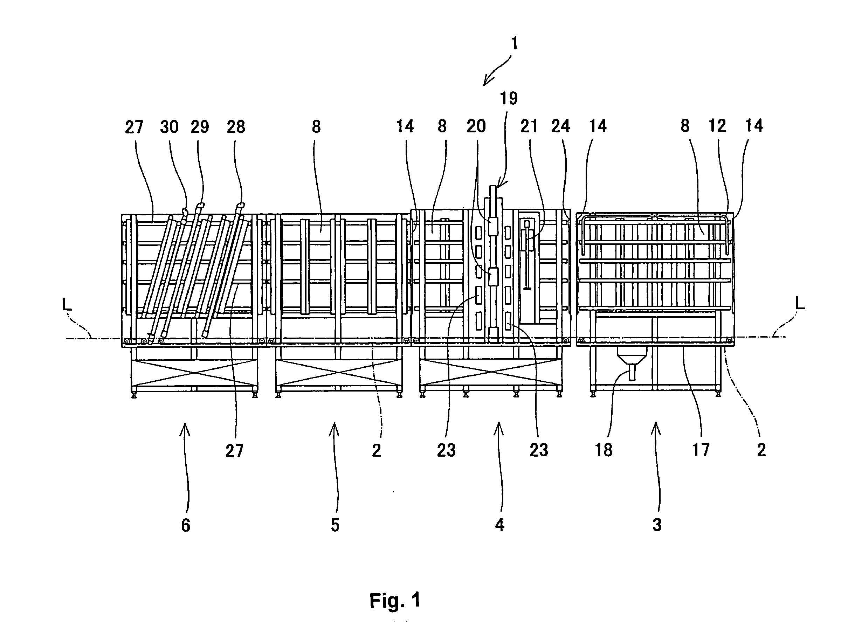

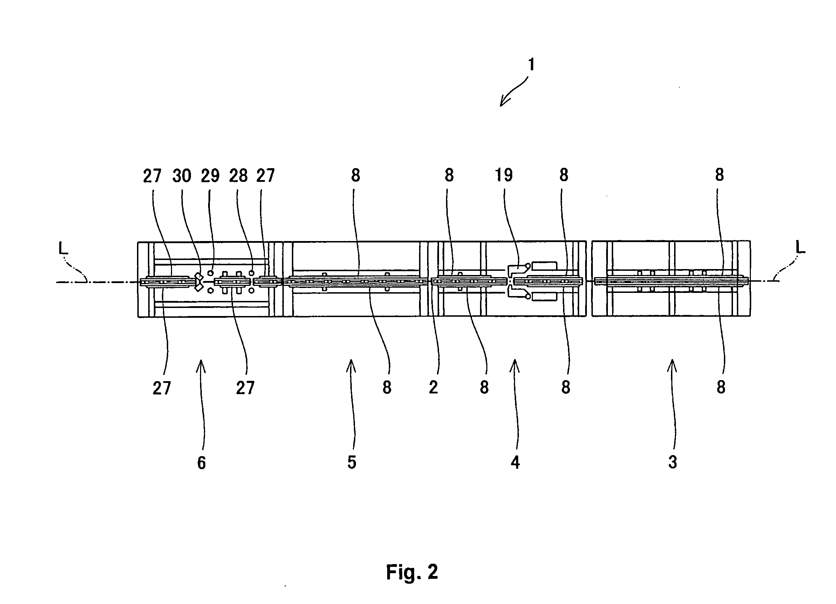

Turning to Figs. 1 and 2, a washing system 1 is equipped with belt conveyors 2 that are configured to horizontally convey a rectangular glass plate G in a substantially upright position while supporting a bottom of the glass plate G Instead of the belt conveyors, known conveyors such as roller conveyors may be used. Along the direction in which the belt conveyors 2 convey the glass plate G, i.e., a pass line L of the glass plate G, a cleaning agent washing device 3 that washes the surface of the glass plate G by using a cleaning agent, a high-pressure liquid spray washing device 4 that washes the surface of the glass plate G by using a high-pressure liquid spray (also referred to as a water jet), a finishing washing device 5 that washes away dust, etc which has been removed from the glass plate G by the high-pressure liquid spray washing device 4 and is floating in water, and a water removing device 6 that removes water from the surface of the washed glass plate G, are aligned in this order from upstream side. In this embodiment, the water removing device 6 is configured to conduct finish washing before removing water, but this is not intended to be limited.

In addition, along the direction in which the belt conveyors 2 convey the glass plate G (pass line L), fluid guides 8 are vertically mounted on both sides to support the surface of the glass plate G in a non-contact state. The fluid guides 8 are separate to correspond to the units 3, 4, 5, and 6 along the conveyance direction. Since the fluid guide corresponding to the water removing device 6 is different in construction from the fluid guides corresponding to the units 3, 4, and 5, it is designated by a reference number 27.

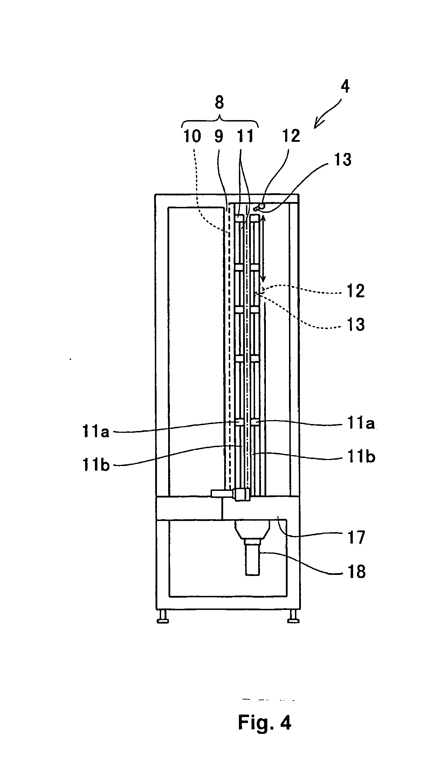

As can be seen from Fig. 1 and Fig. 4 which is a side view of the cleaning agent washing device 3, the fluid guide 8 includes a frame member 9 and a guide plate 10 mounted to the frame member 9. The guide plate 10 is provided on a surface thereof with fluid ejecting portions 11 configured to apply a fluid pressure to the surface of the glass plate G for supporting the glass plate G

The fluid ejecting portions 11 are entirely adjustable to be parallel to the surface of the glass plate G. The fluid ejecting portions 11 are equipped with fluid ejecting holes 11c arranged to be spaced apart from each other to eject a fluid to the surface of the glass plate G

Because the fluid guides 8 are mounted on right and left sides of the pass line L, the fluid pressures applied to the both surfaces of the glass plate G are balanced to enable the glass plate G to be maintained in the substantially upright position without contacting any structural members. In this embodiment, water is used as the fluid for supporting the glass plate G The use of a liquid as the supporting fluid can effectively remove cullet particles or other dusts from the glass plate G The water is selected from tap water, pure water, a cleaning agent water solution, etc is used.

Instead of arranging a number of fluid ejecting portions 11, a porous fluid guide formed of a porous material may be mounted to ooze out liquid to a guide surface. The porous fluid guide is able to support the glass plate G in the substantially upright position without contact with any structural member by utilizing a surface tension of the liquid.

The supporting fluid is not limited to the liquid, but may be a clean gas. In a case where a fluid guide using a gas as the supporting fluid is mounted only on one side of the pass line L, the glass plate G is slightly tilted toward the fluid guide so that the fluid guide can support the glass plate G in a non-contact state by a balance between a lateral component of a weight of the glass plate G and a force of a gas pressure. Nonetheless, the supporting fluid is desirably the liquid, because the glass plate G is washed by the liquid.

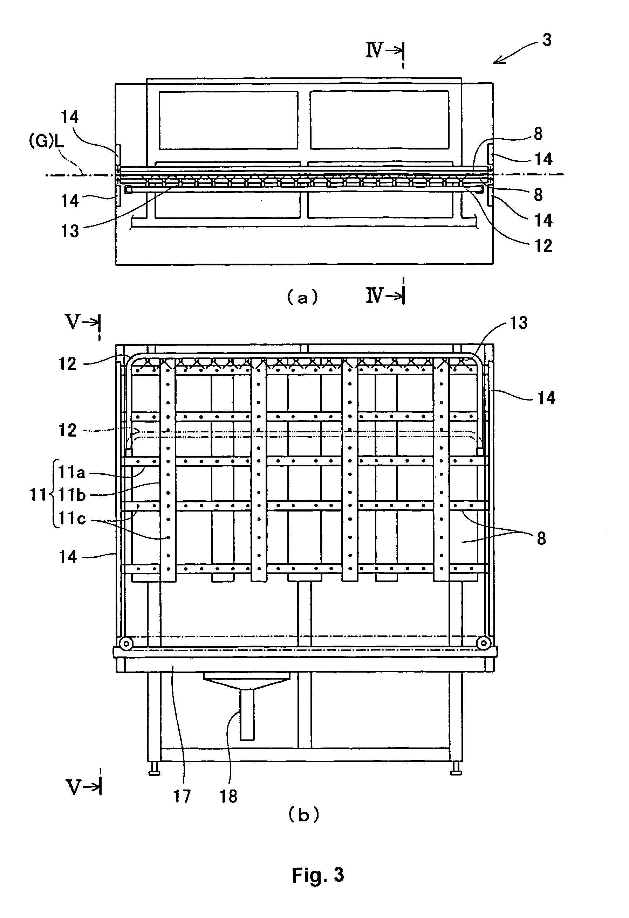

With reference to Figs. 3 to 5, the cleaning agent washing device 3 will be described. The cleaning agent washing device 3 is constituted in such a manner that the belt conveyor 2 corresponding to the cleaning agent washing device 3 functions as a glass plate supporting unit of the cleaning agent washing device 3. In the front view of Fig. 3(b), the fluid guide 8 on a near side is omitted for easier understanding.

In the fluid washing unit 3, first fluid ejecting portions 11a and second fluid ejecting portions 11b are equipped as the fluid ejecting portions 11. The first fluid ejecting portions 11a are arranged in plural stages to be vertically spaced apart from each other and to extend horizontally. The second fluid ejecting portions 11b are arranged in plural stages to be spaced apart from each other in the conveyance direction of the glass plate G and to extend vertically. Each of the fluid ejecting portions 11a and 11b is provided with the fluid ejecting holes 11c that eject a fluid to the surface of the glass plate G The fluid ejecting portion 11a and 11b are adjustable to be entirely parallel to the surface of the glass plate G

The cleaning agent washing device 3 is configured in such a manner that a cleaning agent is forcibly delivered from a cleaning agent supply source (not shown) to the fluid guides 8 and a cleaning agent water solution (washing liquid) is ejected from the fluid ejecting holes 11c. Thereby, the cleaning agent washing device 3 washes the entire surface of the glass plate G by the washing liquid to remove oil from the surface of the glass plate G. Instead of the washing liquid, the washing devices 4 and 5 located downstream may use pure water or the like as the fluid for use with the fluid guides 8. The washing liquid need not be ejected from the entire of the fluid guide 8 of the cleaning agent washing device 3 but may be ejected from a part of the fluid guide 8. Furthermore, by increasing the temperature of the washing liquid up to, for example about 80°C, the oil or the like can be removed more effectively.

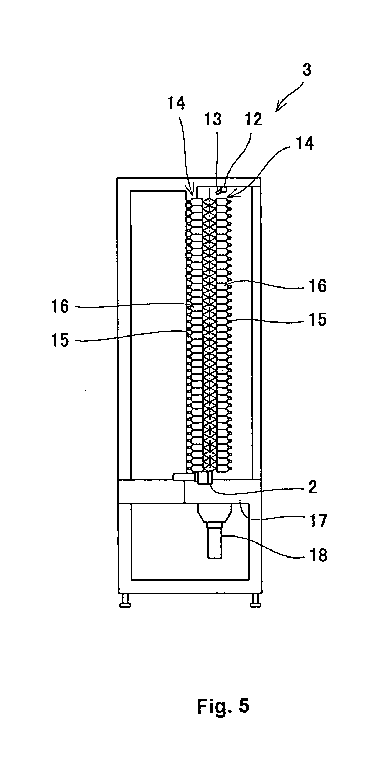

As shown in Figs. 3 and 5, the cleaning agent washing device 3 is equipped with a cleaning agent supply pipe 12 extending at a location corresponding to an upper side of the glass plate G being conveyed (location conforming to the upper side of the glass plate G), on the opposite side of the fluid guide 8 with respect to the glass plate G The cleaning agent supply pipe 12 is provided with a number of cleaning agent nozzles 13 (not shown) to spray the cleaning agent to one surface of the glass plate G from the upper side. The cleaning agent is forcibly delivered from a cleaning agent supply source (not shown) to the cleaning agent supply pipe 12. The cleaning agent supply pipe 12 is vertically movable according to the vertical size of the glass plate G to be washed.

A number of cleaning agent nozzles 13 are able to supply the cleaning agent to the entire of the upper side of one surface of the glass plate G The cleaning agent flows to the entire of one surface of the glass plate G by the gravity, thereby washing the one surface. Whereas the cleaning agent washing device 3 is equipped with a single cleaning agent supply pipe 12, the construction of the present invention is not intended to be limited to this. For example, a plurality of cleaning agent supply pipes 12 may be mounted to be vertically spaced apart from each other. This makes it possible to sufficiently supply the cleaning agent to the surface of the glass plate G even if the glass plate G is conveyed at a higher speed.

Whereas the cleaning agent washing device 3 is equipped with the fluid guides 8 on both sides of the pass line L to eject the washing liquid as stated above, it may be equipped with one fluid guide 8 only on the opposite side of the cleaning agent supply pipe 12 with respect to the pass line L in a case where the cleaning agent washing device 3 is equipped with the cleaning agent supply pipe 12. Because the supporting fluid is the liquid, the glass plate G is suctioned by the surface tension of the liquid filled in a gap between the surface of the glass plate G and the surface of the fluid ejecting portion 11, and thus, the glass plate G is able to be conveyed in the substantially upright position in a non-contact state, if the fluid guide 8 is mounted only on one side of the pass line L Nonetheless, it is assumed that the fluid guides 8 can wash the glass plate G more effectively than the above constructed cleaning agent supply pipe 12, and therefore, it is desirable to equip the fluid guides 8 on both sides of the pass line L to eject the cleaning liquid.

The cleaning agent washing in the cleaning agent washing device 3 allows the dust and oil to be removed from the surface of the glass plate G

Air curtain elements 14 are respectively mounted at an upstream end and a downstream end of the cleaning agent washing device 3 so as to extend vertically. As shown in Fig. 5, each air curtain element 14 includes air-supply pipes 15 that are mounted opposite to each other on both sides of the pass line L to extend vertically and is configured to supply clean air, and a number of air nozzles (liquid removing nozzles) 16 densely arranged along the air-supply pipes 15 to blow the clean air to the surfaces of the glass plate G The clean air means air from which dust and so on have been removed by a filter or the like. The clean air is forcibly delivered from an air supply source (not shown) to the air supply pipes 15. Each of the air curtain elements 14 located on the upstream end and on the downstream end ejects the clean air to the glass plate G being conveyed to form air curtains. This makes it possible to inhibit entry of water or the like into the cleaning agent washing device 3 from its upstream side or from its downstream side. As a result, a variation in the concentration of the washing liquid is inhibited. In addition, entry of the washing liquid to a downstream stage or an upstream stage is inhibited.

In Fig. 3(b) and Fig. 5, reference numeral 17 designates a water receiver channel mounted under the belt conveyor 2. Reference numeral 18 designates a water collecting pipe that collects the liquid received by the water receiver channel 17 into a washing liquid tank (not shown) located thereunder. The glass plate G that has been subjected to the cleaning agent washing is conveyed to the high-pressure liquid spray washing device 4 (Fig.1).

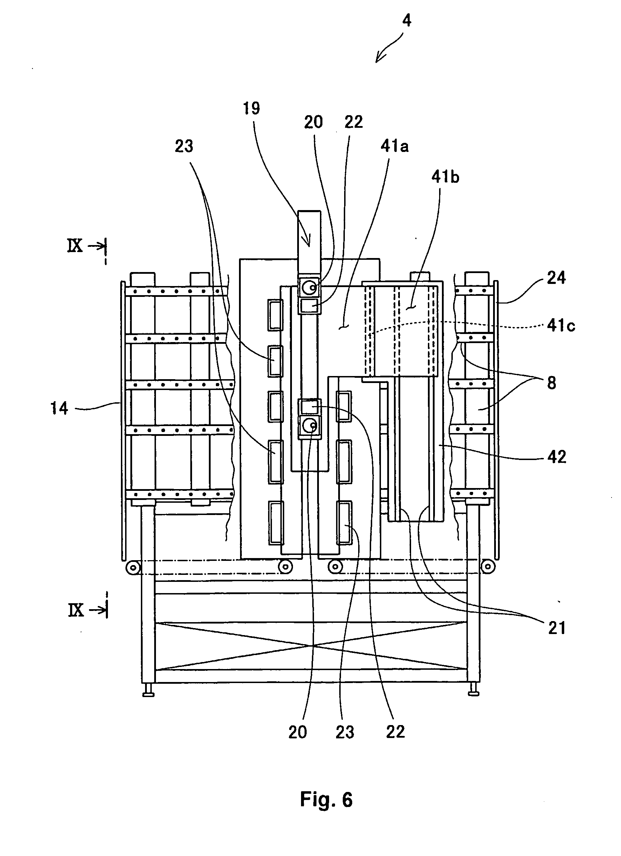

Subsequently, the high-pressure liquid spray washing device 4 will be described with reference to Figs. 6 to 9. In the high-pressure liquid spray washing device 4, the belt conveyor 2 corresponding to the high-pressure liquid spray washing device 4 functions as a glass plate support unit in the high-pressure liquid spray unit 4. As described above, in the high-pressure liquid spray washing device 4, the fluid guides 8 are mounted on both sides with respect to the pass line L In an intermediate position of the fluid guide 8 in the conveyance direction, the high-pressure liquid spray elements 19 are disposed. In Fig. 6, for easier understanding of the high-pressure liquid spray elements 19, the fluid guides 8 are illustrated to be partially cut away.

The high-pressure liquid spray elements 19 disposed opposite to each other with respect to the pass line L respectively have nozzle support frames 41. A pair of high-pressure liquid spray nozzles 20 are mounted to a nozzle support frame 41 to be vertically spaced apart from each other. A distance between the nozzles 20 is changeable. A high-pressure water jet is ejected from the high-pressure liquid spray nozzles 20. The high-pressure liquid spray nozzles 20 are opposite to each other with respect to the pass line L so that the pressures of the high-pressure water jet ejected from the high-pressure liquid spray nozzles 20 are balanced at both sides of the glass plate G

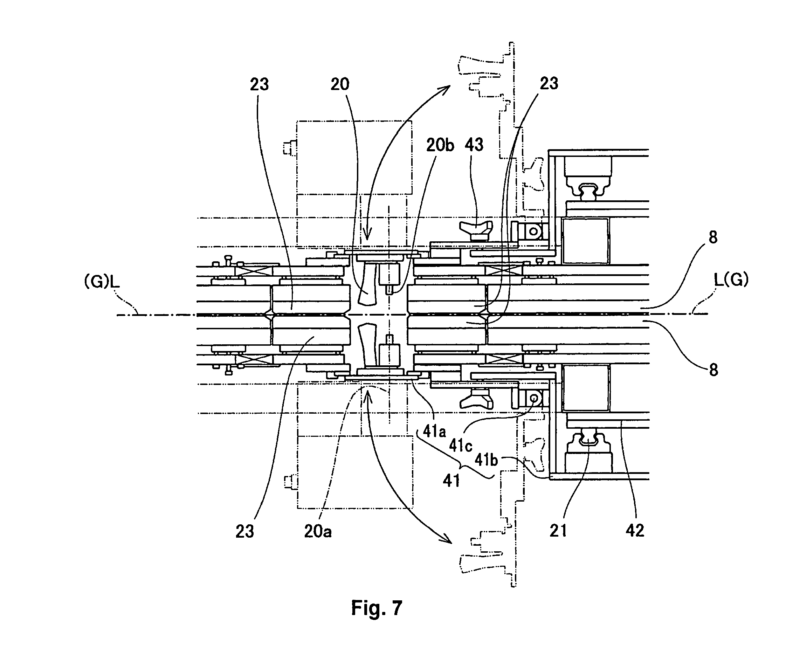

As shown in Figs. 6 and 7, the nozzle support frame 41 is vertically moved by a linear guide mechanism 21 mounted to extend vertically to a base frame 42 of the high-pressure liquid spray element 19. As a result, the high-pressure liquid spray nozzle 20 is moved vertically relative to the glass plate G A nozzle support portion 41a of the nozzle support frame 41 is mounted to the base portion 41b of the nozzle support frame 41 by a hinge 41c so as to be pivotable outward. By pivoting the nozzle support portion 41a, the high-pressure liquid spray nozzle 20 is movable between an operation position in which the high-pressure liquid spray nozzle 20 faces the surface of the glass plate G and a non-operation position in which the high-pressure liquid spray nozzle 20 faces outward. The high-pressure liquid spray nozzle 20 is subjected to maintenance or the like in the non-operation position. Reference number 43 denotes a knob of a fixing tool by which the nozzle support portion 41a is fixed to and separated from the base frame 42.

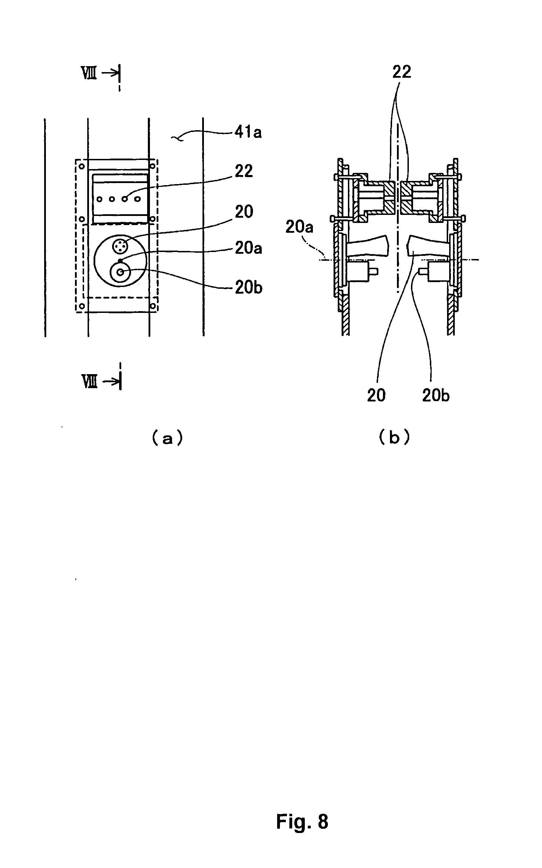

Each high-pressure liquid spray nozzle 20 is rotatable around a rotational axis 20a (see Figs. 7 and 8) in a direction perpendicular to the glass plate G Since each nozzle 20 vertically moves while rotating, washing of a wide region of the surface of the glass plate G is accomplished with a few nozzles 20. Reference symbol 20b denotes a balance weight for stabilizing rotation of the high-pressure liquid spray nozzle 20.

Movable fluid guides 22 are mounted to be movable up and down together with the high-pressure liquid spray nozzles 20 to inhibit vibration of the glass plate G due to the high-pressure water jet ejected from the high-pressure liquid spray nozzles 20. The movable fluid guides 22 are opposite to each other with respect to the pass line L As shown in Fig. 6, the movable fluid guides 22 are disposed either above or below the high-pressure liquid spray nozzles 20, but the construction of the present invention is not limited to this. For example, the movable fluid guides 22 may be disposed above and below, on right and left sides, or otherwise above and below and on right and left sides.

A plurality of vertical fluid guides 23 are arranged vertically adjacent to each other on both sides of the high-pressure liquid spray element 19 in the conveyance direction. Thus, since the vertical fluid guides 23 are disposed in close proximity to both sides of the high-pressure liquid spray elements 19, the vibration of the glass plate G caused by the high-pressure liquid spray nozzles 20 can be inhibited more effectively.

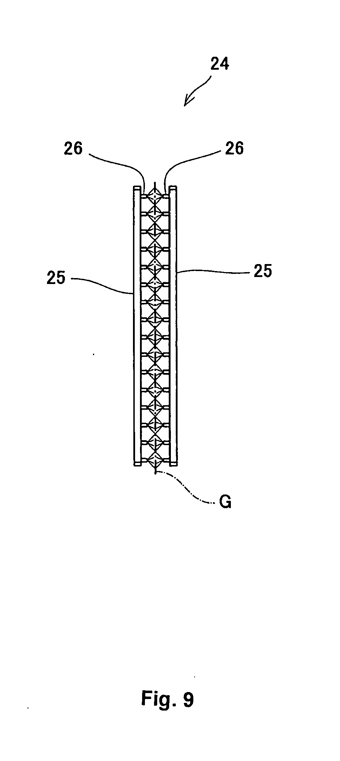

At an upstream end of the high-pressure liquid spray washing device 4, a water washing element 24 is mounted to extend vertically. As shown in Fig. 9, the water washing element 24 includes water supply pipes 25 that are disposed on both sides to be opposite to each other with respect to the pass line Land to extend vertically and are configured to supply pure water, and a number of water nozzles 26 that are aligned along the water supply pipes 25 to spray the water to the surface of the glass plate G The water is forcibly delivered from a water supply source (not shown) to the water supply pipes 25. Since the water washing element 24 located at the upstream end sprays the water to the glass plate being conveyed, the water flows to the entire of both surfaces of the glass plate G The water washing element 24 located at the upstream end washes away the washing liquid that may adhere to the surface of the glass plate G in a previous step. Thereby, when the surface of the glass plate G is dried, adhesion of the dust, etc, to the surface of the glass plate G is avoided.

At a downstream end of the high-pressure liquid spray washing device 4, the air curtain element 14, similar to those of the cleaning agent washing device 3, are mounted to extend vertically (Fig. 6). The construction and installation purpose of the air curtain element 14 are identical to those described above and will not be further described.

Whereas the high-pressure liquid spray elements 19 are respectively disposed on both sides with respect to the pass line L, the construction of the present invention is not intended to be limited to this. A plurality of high-pressure liquid spray elements 19 may be disposed on each of the both sides with respect to the pass line L This makes it possible to sufficiently clean the glass plate G if the conveyance speed of the glass plate G is increased. Also, the number of high-pressure liquid spray nozzles 20 mounted to each high-pressure liquid spray element 19 may be increased or decreased as required. By increasing the number of the high-pressure liquid spray nozzles 20, the entire surface of the glass plate G is washed by the high-pressure liquid spray without vertically moving the high-pressure liquid spray nozzles 20. In that case, the high-pressure liquid spray nozzles 20 may be arranged densely in the vertical direction.

The high-pressure liquid spray washing can enhance a washing effect as compared to the conventional ultrasonic wave washing or brush washing. The glass plate G that has been subjected to the high-pressure liquid spray washing is then conveyed to the finishing washing device 5 (Fig.1).

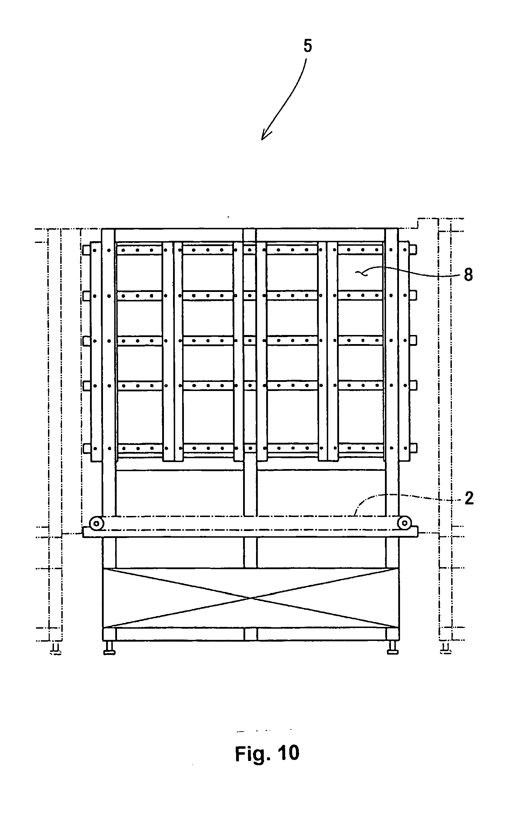

Turning to Fig.10, the finishing washing device 5 is mounted to carefully wash away the oil, the dust, etc released from the surface of the glass plate G by the cleaning agent washing device 3 or the high-pressure liquid spray washing device 4 by using circulated pure water. Therefore, the finishing washing device 5 is constructed in such a manner that only the fluid guides 8 are disposed on both sides with respect to the pass line L, i.e., the finishing washing device 5 is not specifically equipped with other units. This is because the glass plate G is washed by the water supplied from the fluid guides 8 to the surface thereof. In some cases, the finishing washing device 5 may be omitted from the washing system 1. The glass plate G that has been subjected to the finish washing is then conveyed to the water removing device 6 (see Fig.1).

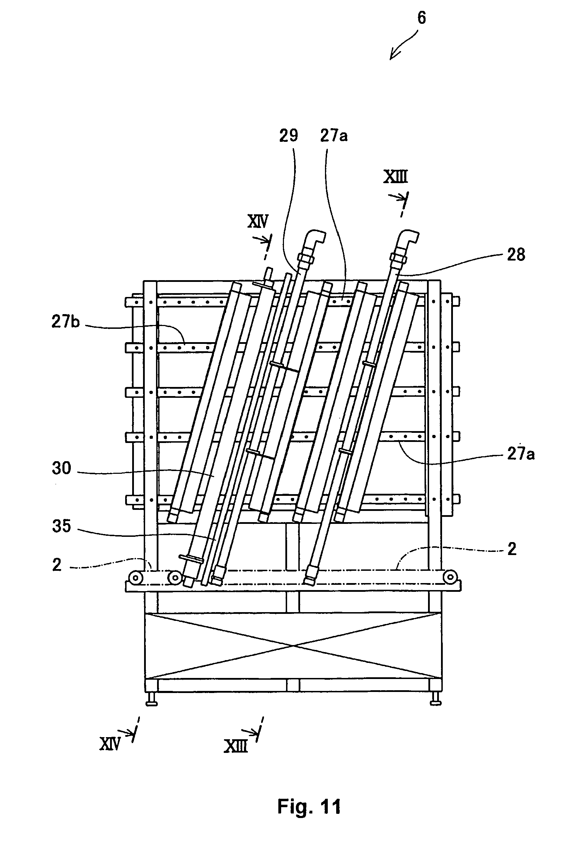

With reference to Figs. 11 to 14, the water removing device 6 will be described. In the water removing device 6, the belt conveyor 2 corresponding to the water removing device 6 functions as a glass plate support unit of the water removing device 6. As described above, in the water removing device 6, the fluid guides 27 are mounted on both sides with respect to the pass line L

As shown in Figs. 11,13, and 14, in an intermediate position of the fluid guide 27 in the conveyance direction and on both sides with respect to the pass line L, two water washing elements 28 and 29, and the water removing element 30 are mounted to be spaced apart from each other and to extend in parallel, and are arranged in this order from upstream side in the conveyance direction. The fluid guide 27 is different from the fluid guide 8 in that an upstream portion 27a located upstream of a separating plate 35 described later uses water as the supporting fluid and a downstream portion 27b located downstream of the separating plate 35 uses super clean air as the supporting fluid. The super clean air refers to air that has been cleaned by a filter or the like having meshes finer than those of the filter for the clean air.

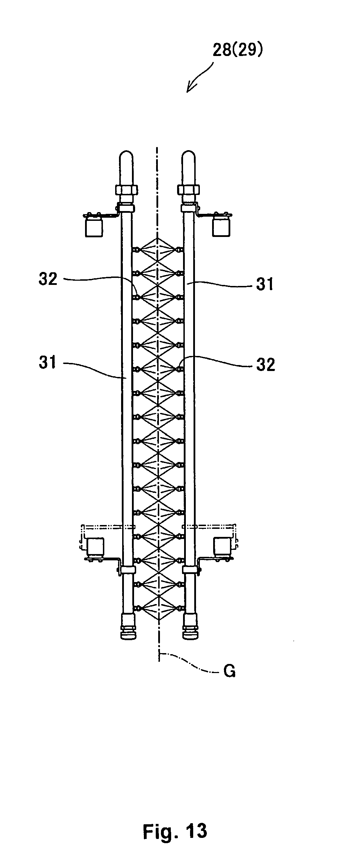

As shown in Fig. 13, each of the water washing elements 28 and 29 includes water supply pipes 31 extending to be tilted slightly in an upstream direction from the vertical direction and a number of water nozzles 32 aligned in the longitudinal direction of the water supply pipes 31. Pure water is forcibly delivered from a water supply source (not shown) to the water supply pipes 31. Each water nozzle 32 ejects the pure water to the surface of the glass plate G The water washing elements 28 and 29 repeat washing as in the finishing washing device 5 in order to wash away the oil, the dust, etc, more carefully from the surface of the glass plate G Rather than the circulated water, the water washing elements 28 and 29 use water to be discarded after use, to improve cleanliness of the glass plate G

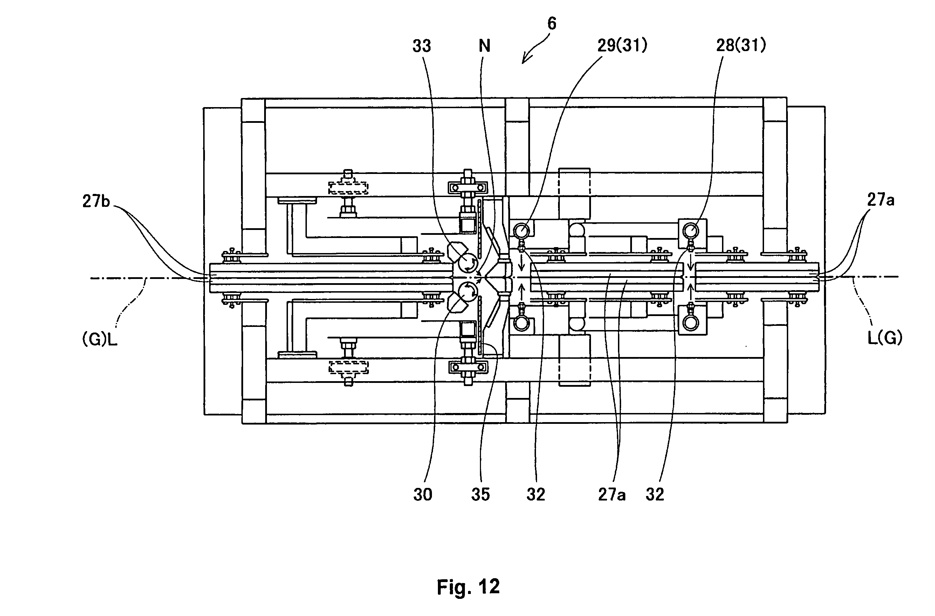

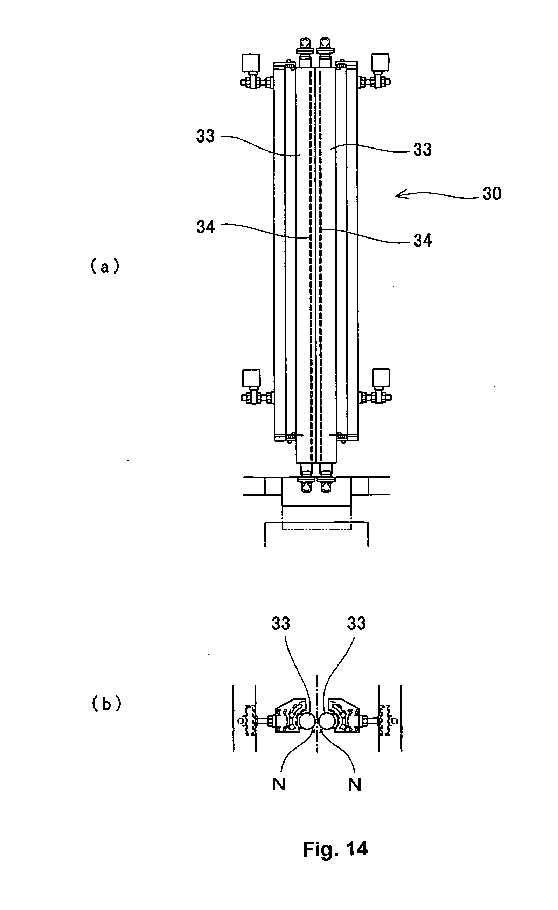

The water removing element 30 includes air supply pipes (air knife frames) 33 extending in parallel with the water supply pipes 31 to be slightly tilted in the upstream direction from the vertical direction. The super clean air is forcibly delivered from an air supply source (not shown) to the air supply pipes 33. As shown in Figs. 12 and 14, each air supply pipe 33 has a slit 34 with a small width to blow out the air to the surface of the glass plate G. The water removing element 30 is configured to spray a membranous air jet N ejected from both sides of the pass line L to the corresponding regions of the both surfaces of the glass plate G The slit 34 may extend continuously or at small intervals in the longitudinal direction of the air supply pipe 33. The membranous air jet N is sprayed to the glass plate G entirely in the vertical direction (slightly tilted in the upstream direction). The air jet is ejected at a velocity approximately as high as a sound velocity. The air jet is called an air knife N.

As shown in Fig.12, each air supply pipe 33 is rotatable around a longitudinal center axis thereof. Thereby, the direction of the air knife N changes. For example, the air knife N can be ejected in the direction perpendicular to the surface of the glass plate G or otherwise in the upstream direction or in the downstream direction from the direction perpendicular to the surface of the glass plate G By ejecting the air knife N slightly in the upstream direction by rotating the air supply pipe 22 tilted slightly in the upstream direction from the vertical direction, the air knife N can blow away the water adhering onto the surface of the glass plate G slightly downward in the upstream direction. As a result, the water is blown away from the air knife frame 33 downward in the upstream direction, and does not move in the downstream direction. Through the air knifes N, the water or the like is removed from the entire surface of the glass plate G and thus the glass plate G is dried.

Since the water washing elements 28 and 29 are tilted slightly in the upstream direction from the vertical direction, new water is supplied to any vertical region of the glass plate G being conveyed, from the upper side thereof, enabling washing to obtain a high quality product. The water washing elements 28 and 29 are rotatable along longitudinal axes thereof as in the air supply pipes 33 to change the ejecting direction of the pure water.

As shown in Fig. 12, the separating plates 35 are disposed in close proximity to the water removing elements 30 on both sides of the pass line L The separating plates 35 serve to inhibit movement in the downstream direction of the water from the water removing element 30. Each separating plate 35 protrudes outward from each water removing element 30 in the direction perpendicular to a vertical plane (substantially the surface of the glass plate G) including the pass line L. Each separating plate 35 extends in parallel with the air supply pipe 33 and the water washing elements 28 and 29 to be tilted in the upstream direction from the vertical direction. The separating plate 35 thus constructed can inhibit movement of the water toward the water removing element 30 on the downstream side even if the water being ejected on the upstream side water splashes. Instead of the close proximity to the water removing element 30, the separating plate 35 may alternatively be mounted downstream of and in close proximity to the water washing element 29.

As described above, the fluid guide 27 uses the pure water as the supporting fluid in the region upstream of the separating plate 35 and the super clean air as the supporting fluid in the region downstream of the separating plate 35. Therefore, no water is used in the region downstream of the air knife frames 33, and thus the glass plate G is dried.

Although not shown, the belt conveyors 2 which are support units of the respective units 3, 4, 5, and 6 in the washing system 1 may be configured to be movable to drop the supported glass plate G therefrom. For example, if the belt conveyor 2 is configured to be movable in the direction perpendicular to the conveyance direction, then the glass plate G on the belt conveyor 2 is dropped. Or, the glass plate G may be dropped by retracting the belt of the belt conveyor 2 from the pass line L by tilting the belt. With this configuration, glass plates that have been damaged and thus are unusable as products during washing can be easily eliminated without contaminating the conveyance line or the washing system with glass pieces.

In accordance with the above described washing system 1, since the fluid guides 8 and 27 are mounted on one side or on both sides of the pass line L, the surface tension of the liquid supporting the glass plate G causes the gap between the fluid guides 8 and 27 and the glass plate G to become the liquid layer with a constant thickness, and therefore, the glass plate G can be conveyed in a supported state without contacting any structural members. In addition, the use of the liquid as the fluid for guiding the glass plate enables the cullet particles or the dust to be removed from the glass plate G more effectively.

Whereas the glass plate has been illustrated as the plate material to be processed, the plate material of the present invention is not intended to be limited to this. For example, various plate materials such as rare metal plate materials or silicon plate materials, or flat display glasses, may be processed.

Whereas the cleaning agent washing device 3, the high-pressure liquid spray washing device 4, the finishing washing device 5, and the water removing device 6 are aligned in the above described washing system 1, the construction of the present invention is not intended to be limited to this. For example, the above units may be arranged such that the conveyance line extends to form a right angle or the conveyance lines extend in parallel.

While the present invention has been described with reference specific examples, which are intended to be illustrative only and not to be limiting of the invention, it will be apparent to those of ordinary skill in the art that changes, additions or deletions may be made to the disclosed embodiments without departing from the spirit and scope of the invention.

### [Industrial Applicability]

In accordance with the present invention, the plate materials including large-sized and thinned glass plates can be washed quickly and effectively so that a quality of the plate materials is improved.

## Claims

1. A cleaning agent washing device of plate materials comprising:
a support unit configured to support a lower end of a plate material placed in a substantially upright position;
a fluid guide configured to apply a fluid pressure to a side surface of the plate material to support the plate material in the substantially upright position and in a non-contact state; and
a cleaning liquid supply unit configured to supply a cleaning liquid to the plate material in the substantially upright position;
wherein the cleaning liquid supply unit includes at least a part of the fluid guide that is configured to supply a flow of a cleaning liquid to the side surface of the plate material.

2. The cleaning agent washing device of plate materials according to claim 1, wherein
the fluid guide included in the cleaning liquid supply unit includes first fluid ejecting portions arranged vertically in plural stages to extend horizontally, and the first fluid ejecting portions are each provided with a plurality of cleaning liquid ejecting holes.

3. The cleaning agent washing device of plate material according to claim 1, wherein
the fluid guide included in the cleaning liquid supply unit further includes second fluid ejecting portions arranged to extend vertically and to be horizontally spaced apart from each other, and the second fluid ejecting portions are each provided with a plurality of cleaning liquid ejecting holes.

4. The cleaning agent washing device of plate material according to claim 1, wherein
the support unit includes a conveyance portion configured to horizontally convey the plate material in the substantially upright position, and the fluid guide is disposed along a conveying path of the conveyance portion.

5. The cleaning agent washing device of plate material according to claim 4, wherein
at an upstream end side and a downstream end side of the cleaning liquid supply unit in the direction in which the plate material is conveyed, air curtain elements are mounted to extend vertically along the plate material placed in the substantially upright position, and the air curtain elements are provided with a plurality of air ejecting nozzles arranged vertically

6. A high-pressure liquid spray washing device of plate material comprising:
a support unit configured to support a lower end of a plate material placed in a substantially upright position;
a fluid guide configured to apply a fluid pressure to a side surface of the plate material to support the plate material in the substantially upright position and in a non-contact state; and
a high-pressure liquid spray unit configured to apply a high-pressure liquid spray to both surfaces of the plate material in the substantially upright position.

7. The high-pressure liquid spray washing device of plate material according to claim 6,
wherein the support unit includes a conveyance portion configured to horizontally convey the plate material in the substantially upright position, and the fluid guide is disposed along a path in which the conveyance portion conveys the plate material.

8. The high-pressure liquid spray washing device of plate material according to claim 7,
wherein the high-pressure liquid spray unit includes high-pressure liquid spray nozzles configured to be vertically movable, and high-pressure liquid spray nozzles disposed on both sides of the plate material are located opposite to face each other with respect to a plate material support position.

9. The high-pressure liquid spray washing device of plate material according to claim 7,
wherein the high-pressure liquid spray unit includes a plurality of high-pressure liquid spray nozzles vertically arranged, and high-pressure liquid spray nozzles disposed on both sides of the plate material are located opposite to face each other with respect to a plate material support position.

10. The high-pressure liquid spray washing device of plate material according to claim 8 or claim 9, wherein
the high-pressure liquid spray nozzles are rotatable around rotational axes extending in a direction substantially perpendicular to the surface of the plate material to be washed.

11. The high-pressure liquid spray washing device of plate material according to claim 8,
wherein movable fluid guides are mounted adjacent the high-pressure liquid spray nozzles so as to be vertically movable together with the high-pressure liquid spray nozzles.

12. The high-pressure liquid spray washing device of plate material according to claim 7, further comprising:
a water washing unit mounted at the upstream end side in the direction in which the plate material is conveyed so as to extend in a vertical direction of the glass plate in the substantially upright position, and the water washing unit is provided with a plurality of water ejecting nozzles arranged vertically

13. A water removing device of plate material comprising:
a conveyance unit configured to convey a plate material placed in a substantially upright position while supporting a lower end of the plate material;
a fluid guide configured to apply a fluid pressure to a side surface of the plate material to support the plate material in the substantially upright position and in a non-contact state; and
water removing units extending substantially from an upper end of the plate material to a lower end of the plate material to eject a membranous air jet to both surfaces of the plate material in the substantially upright position.

14. The water removing device of plate material according to claim 13, further comprising:
water washing units that are located upstream of each of the water removing units and extend vertically on the both sides of the plate material in the substantially upright position;
wherein the water washing units comprise a plurality of water ejecting nozzles arranged vertically.

15. The water removing device of plate material according to claim 13, wherein
the water removing unit is disposed to be tilted in an upstream direction in the direction in which the plate material is conveyed.

16. The water removing device of plate material according to claim 13, wherein
the water washing unit is disposed to be tilted in an upstream direction in the direction in which the plate material is conveyed.

17. A plate material washing system comprising:
a conveyance unit configured to convey a plate material in a substantially upright position while supporting a lower end of the plate material;
a fluid guide configured to apply a fluid pressure to a side surface of the plate material to support the plate material in the substantially upright position and in a non-contact state;
a cleaning agent washing device mounted in a path along which the conveyance unit conveys the plate material;
a high-pressure liquid spray washing device mounted downstream of the cleaning agent washing device in the path along which the conveyance unit conveys the plate material; and
a water removing device mounted downstream of the high-pressure liquid spray washing device in the path along which the conveyance unit conveys the plate material;
wherein the cleaning agent washing device includes a support unit configured to support the lower end of the plate material placed in the substantially upright position; the fluid guide configured to apply the fluid pressure to the side surface of the plate material to support the plate material in the substantially upright position and in the non-contact state; and a cleaning liquid supply unit configured to supply a flow of a cleaning liquid to the plate material in the substantially upright position;
wherein the cleaning liquid supply unit includes at least a part of the fluid guide that is configured to supply a flow of the cleaning agent to the side surface of the plate material;
wherein the high-pressure liquid spray washing device includes: the support unit configured to support the lower end of the plate material placed in the substantially upright position; the fluid guide configured to apply the fluid pressure to the side surface of the plate material to support the plate material in the substantially upright position and in the non-contact state; and a high-pressure liquid spray unit configured to apply a high-pressure liquid spray to both surfaces of the plate material in the substantially upright position; and
wherein the water removing device includes: a conveyance unit configured to convey the plate material placed in the substantially upright position while supporting the lower end of the plate material; the fluid guide configured to apply the fluid pressure to the side surface of the plate material to support the plate material in the substantially upright position and in the non-contact state; and a water removing unit extending substantially from an upper end of the plate material to a lower end of the plate material to eject a membranous air jet to the both surfaces of the plate material.

18. The plate material washing system according to claim 17, further comprising:
a finishing washing device located between the high-pressure liquid spray washing device and the water removing device, the finishing washing device including the fluid guides on both sides of the conveyance unit.
